# EUROPÄISCHE PATENTSCHRIFT

(11) **EP 2 139 579 B1**
(45) Veröffentlichungstag und Bekanntmachung des Hinweises auf die Patenterteilung: **03.11.2010**
(21) Anmeldenummer: 08707663.4
(22) Anmeldetag: 12.02.2008
(51) Int. Cl.: B01D 37/02, C12H 1/06

(54) **REGENERATIONSVERFAHREN FÜR FILTERMODULE**
METHOD OF REGENERATION FOR FILTER MODULES
PROCÉDÉ DE RÉGÉNÉRATION POUR MODULES FILTRANTS

(30) Priorität: 16.03.2007 DE 102007013275
(43) Veröffentlichungstag der Anmeldung: 06.01.2010
(73) Patentinhaber: KHS GmbH, Juchostrasse 20 44143 Dortmund (DE)
(72) Erfinder: WESTNER, Hans, 55595 Mandel (DE); ZELLER, Andreas, 55543 Bad Kreuznach (DE)
(86) Internationale Anmeldenummer: PCT/EP2008/001034
(87) Internationale Veröffentlichungsnummer: WO 2008/113435

(56) Entgegenhaltungen:
- EP-A- 0 255 696
- EP-A- 0 460 499
- WO-A-86/05511
- WO-A-99/16531
- DE-A1- 10 134 861
- DE-A1- 19 652 499

## Beschreibung

Die Erfindung betrifft ein Regenerationsverfahren zur verlustfreien Regeneration von Filtermodulen, die mindestens ein Filterelement, zum Beispiel eine Filterkerze umfasst, wobei das Regenerationsverfahren bezogen auf ein damit verbundenes Produktionsverfahren die Schritte Produktionsnachlauf (Nachlaufschritt), Filterreinigung (Reinigungsschritt) und Produktionsvorlauf (Vorlaufschritt) umfasst, wobei das Filtermodul am Ende des Reinigungsschrittes mit Gas gefüllt wird, und dabei die im Filtermodul befindliche Flüssigkeit ausgetrieben wird.

Im Stand der Technik sind Filtrationsverfahren für Bier bekannt. Ebenfalls bekannt sind Verfahren zum Regenerieren, Reinigen und An- und Abfahren der Filtereinheiten. Ein übliches Filtermodul in der Bierproduktion umfasst oder besteht aus mehreren Filterkerzen. Diese Filterkerzen sind im bestimmungsgemäßen Betrieb mit einem Filterkuchen aus einem Filterhilfsmittel belegt, um die erforderliche Trennleistung zu erreichen. Ein übliches Filterhilfsmittel ist Kieselgur, das gegebenenfalls mit einem Stabilisator, wie zum Beispiel einem Kieselgel optimiert wird. Aufgrund der Ablagerungen in und auf dem Filterkuchen muss der Druck auf der Unfiltratseite, dem Filterzulauf, kontinuierlich gesteigert werden, um einen gleichbleibenden Volumenstrom durch das Filtermodul aufrecht zu erhalten.

Da die Erhöhung des Drucks technisch begrenzt ist, muss das Filtermodul regelmäßig regeneriert werden. Dazu wird das vorhandene Bier mit entgastem Wasser verdrängt, wozu ca. der 1,2-fache Kesselinhalt erforderlich ist. Dieser so genannte Nachlauf wird bis zu einem bestimmten Stammwürzegehalt, der in der Regel ca. 3% beträgt, in einem speziellen Tank, dem so genannten Vor-/ Nachlauftank, gestapelt. Das stärker verdünnte Bier wird verworfen. Der stromaufwärts des Filtermoduls befindliche Kessel wird anschließend mit Druckluft beaufschlagt und somit die Flüssigkeit durch das Filtermodul in Permeatrichtung ausgetrieben. Filterhilfsmittel und Retentat verbleiben dabei als Filterkuchen an den Filterkerzen.

Nachfolgend wird der beladene Filterkuchen durch filtratseitig eingebrachtes Wasser und Druckluftimpulsen abgesprengt. Die am Boden des Filtermoduls befindliche Suspension wird ausgeschwemmt und abgepumpt.

Anschließend werden die Filterelemente gereinigt, indem unterschiedliche Reinigungsmittel, in der Regel Laugen und/oder Säuren, durch das Filtermodul geleitet werden. Diese Reinigungsmittel werden nachfolgend mittels Wasser, vorzugsweise entgastes Wasser, ausgewaschen. Am Ende dieses Reinigungsschrittes ist das Filtermodul mit klarem Wasser gefüllt. Anschließend erfolgt ein so genannter Vorlauf oder Vorlaufschritt, bei welchem die Filterelemente mittels einer Voranschwemmung unter anderem mit einer geeigneten Schicht an Filterhilfsmittel neu belegt werden. Bei dieser Voranschwemmung wird das vorhandene Wasser über den Filter im Kreis gefördert und das Filterhilfsmittel, in der Regel Kieselgur, eingeleitet, bis die gewünschte Beladung der Filterelemente mit einem Filterkuchen erreicht ist. Im nachfolgenden Schritt wird das im System vorhandene Wasser sukzessive durch eingeleitetes Bier verdrängt. Die verdrängte Flüssigkeit, eine Mischphase mit ansteigender Stammwürze, wird bis zu einem bestimmten Stammwürzegehalt verworfen, der in der Regel bei ca. 3% liegt. Bier mit einem höheren Stammwürzegehalt wird ebenfalls in dem vorgenannten Vor- bzw. Nachlauftank gestapelt und in der Produktion beigemischt. Die Produktion über dieses spezielle Filtermodul erfolgt erneut bis zum Erreichen des max. Betriebsdruckes, wobei in geringer Konzentration stromaufwärts des Filtermoduls permanent Kieselgur zudosiert wird.

Dieses bekannte Regenerationsverfahren erfordert für den Vorlaufschritt ein großes Biervolumen, das fast vollständig verworfen wird. Weiterhin sind große Puffervolumina sowie das dazugehörige Equipment erforderlich. Dies ist aus Umweltgesichtspunkten und wirtschaftlich nachteilig. Ein solches Verfahren wird beispielsweise durch die DE 101 34 861 A1 gezeigt. Die Aufgabe der Erfindung besteht nun darin, diesen Mangel zu beheben und ein technisch gleichwertiges Verfahren aufzuzeigen, das eine geringere Umweltbelastung aufweist.

Diese Aufgabe löst die Erfindung durch das Verfahren zur verlustfreien Regeneration von Filtermodulen, wobei das Filtermodul mindestens ein Filterelement umfasst und das Regenerationsverfahren bezogen auf ein verbundenes Produktionsverfahren die Schritte
a) Produktionsnachlauf (Nachlaufschritt),
b) Filterreinigung (Reinigungsschritt) und
c) Produktionsvorlauf (Vorlaufschritt) aufweist.

Die wesentlichen Merkmale der Schritte a) bis c) sind:
a) Nachlaufschritt, das Produkt wird aus dem Filtermodul ausgeschleust,;
b) Reinigungsschritt, das mindestens eine Filterelement wird von Anhaftungen, insbesondere Filterkuchen und Filterhilfsmitteln befreit und gereinigt;
c) Vorlaufschritt, das mindestens eine Filterelement wird mit Filterhilfsmitteln belegt und das Filtermodul mit Produkt gefüllt.

Kennzeichnendes Merkmal des erfindungsgemäßen Verfahrens ist, dass zu Beginn und am Ende des Reinigungsschrittes das Filtermodul mit Gas gefüllt wird, wobei die im Filtermodul befindliche Flüssigkeit ausgetrieben wird. Idealerweise wird das Filtermodul mit Kohlendioxid, Stickstoff, Druckluft oder einer Mischung aus diesen Gasen gefüllt, wobei ein Druck von 1 bar bis maximal 8 bar eingestellt wird. Idealerweise wird ein Druck von 1,5 bar bis 2,0 bar erreicht. Einer Verbesserung besteht darin, sowohl zu Beginn, als auch am Ende des Reinigungsschrittes das Filtermodul mit Gas zu entleeren. Das durch die Einleitung des Gases zu Beginn des Reinigungsschrittes nicht verdrängbare Flüssigkeitsvolumen, zum Beispiel im Sumpf des Filtermoduls, kann in einen separaten Zwischentank gefördert und bei einer nachfolgenden Produktion stromaufwärts des Filtermoduls in den Leitungsweg des Unfiltrates eingeleitet werden.

Es konnte somit ein Regenerationsverfahren gefunden werden, welches keinen großvolumigen Vor- und Nachlauftank mit dazugehörigen Anschlüssen, Verrohung, Pumpe, Steuerung und Regelung benötig. Durch die neue Verfahrensführung konnte das Vor- und Nachlaufen unterbunden und der Verlust unbrauchbarer Mischphasen weitestgehend vermieden werden.

Eine Verbesserung des Verfahrens besteht darin, das gasgefüllte Filtermodul anschließend mit filtriertem Bier zu füllen, wobei das im System befindliche Gas verdrängt wird und nachfolgend die Voranschwemmung einzuleiten. Hierzu wird das vorgelegte Bier im Kreislauf durch das Filtermodul gefördert und eine Suspension aus Bier und/oder Wasser und Filterhilfsmittel in das Filtermodul oder den Leitungsweg der Kreislaufströmung geleitet. Alternativ wird das Filterhilfsmittel in Reinform dem im Kreislauf durch den Filter geförderten Flüssigkeitsstrom zugefügt. Die durch die Einleitung der Suspension verdrängte Flüssigkeit kann in einen vorhandenen Unfiltratpuffertank oder einen separaten Zwischentank gepumpt werden. Diese so gelagerte Flüssigkeit wird nachfolgend bei der erneuten Produktion stromaufwärts des Filtermoduls eingeleitet. Vorteil der Lagerung in einem separaten Zwischentank ist, dass das aus der Produktion kommende Unfiltrat nicht mit der Mischphase und gegebenenfalls vorhandenen Kieselguranteilen belastet wird. Bei den üblichen Filterbaugrößen ist ein solcher Zwischentank sehr klein im Vergleich zu den sonstigen Lagertanks. Das Flüssigkeitsvolumen aus dem Zwischentank wird bei der nachfolgenden erneuten Produktion in die Zuleitung des Filtermoduls gegeben. Das Flüssigkeitsvolumen kann aber auch bei einem nächsten Vorlaufschritt zum Zwecke der Voranschwemmung mittels einer Pumpe in die Suspension eingeleitet werden.

Eine Variante des erfindungsgemäßen Verfahrens besteht darin, in das gasgefüllte, leere Filtermodul direkt eine Suspension aus Bier und Filterhilfsmittel einzuleiten und diese eine Zeitlang im Kreislauf durch das Filtermodul zu fördern, um die Voranschwemmung zu realisieren. Besonderer Vorteil dieser Verfahrensvariante ist es, dass eine weitere Mischphase sowie deren Lagerung vermieden wird.

Von der Erfindung ist auch ein Brauverfahren für Bier umfasst, bei dem mindestens ein Filtermodul nach einem Regenerationsverfahren gemäß einem der vorgenannten Verfahrensvarianten regeneriert wird.

Das erfindungsgemäße Verfahren wird an einem konkreten Beispiel erläutert. Natürlich sind die Prozessparameter in geeigneter Weise für den Fachmann variierbar, abhängig von den jeweiligen Prozess- und Anlagenbedingungen.

In einem Versuchsaufbau wurde bei einem bekannten Filterverfahren ein Filtermodul mit 18 Filterkerzen eingesetzt, das für eine Filterleistung von 2 m³/h ausgelegt ist. Durch Einleitung von Kohlendioxid bis zu einem Druck von 1,5 bar in den Filter wurde das vorliegende Klarwasser verdrängt. Anschließend wurde das Filtermodul mit filtriertem Bier geflutet und die Voranschwemmung mit einer Suspension aus Bier und Kieselgur begonnen, die in die Zuleitung des Filtermoduls gefördert wurde. Die erzielte Voranschwemmung betrug 1,0 kg/m². Bei der Einleitung der Suspension wurde das vorgelegte Bier verdrängt und in einen separaten Zwischentank gefördert. Der hierfür vorgesehene zusätzliche Zwischentank hatte ein Fassungsvermögen von ca. 0,08 m³. Dieses Biervolumen wurde in der nachfolgenden Produktion stromaufwärts des Filtermoduls zugeleitet.

Neben den bereits genannten Vorteilen konnte weiterhin beobachtet werden, dass durch das erfindungsgemäß vereinfachte Regenerationsverfahren und die verminderte Menge an zu fördernden Flüssigkeitsvolumina, die Zeit für die Filterregeneration um ca. 10% verringert werden konnte.

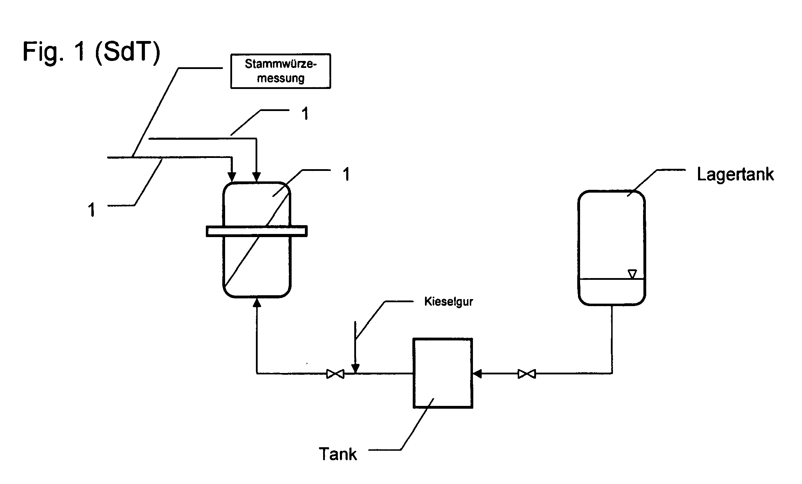

## Patentansprüche

1. Regenerationsverfahren zur verlustfreien Regeneration von Filtermodulen, umfassend mindestens ein Filterelement, wobei das Regenerationsverfahren, bezogen auf ein damit verbundenes Produktionsverfahren, die Schritte Produktionsnachlauf (Nachlaufschritt), Filterreinigung (Reinigungsschritt) und Produktionsvorlauf (Vorlaufschritt) umfasst, wobei bei dem Nachlaufschritt Produkt aus dem Filtermodul geleitet wird, bei dem Reinigungsschritt das mindestens eine Filterelement von Anhaftungen, insbesondere Filterkuchen und Filterhilfsmitteln, befreit und gereinigt wird und beim Vorlaufschritt das mindestens eine Filterelement mit Filterhilfsmittel belegt wird und das Filtermodul mit Produkt gefüllt wird, **dadurch gekennzeichnet, dass** das Filtermodul am Ende des Reinigungsschrittes mit Gas gefüllt wird, wobei die im Filtermodul befindliche Flüssigkeit ausgetrieben wird, wobei das Filtermodul bis zu einem Druck von 1 bar bis maximal 8 bar gefüllt wird und wobei das gasgefüllte Filtermodul mit filtriertem Bier gefüllt wird und nachfolgend die Voranschwemmung des mindestens einen Filterelementes erfolgt, wobei eine Suspension aus Bier und/oder Wasser und Filterhilfsmittel in das Filtermodul und eine Zeitlang im Kreislauf durch das Filtermodul geleitet wird.

2. Verfahren nach Anspruch 1, **dadurch gekennzeichnet, dass** das Filtermodul zu Beginn und am Ende des Reinigungsschrittes mit Gas gefüllt wird, wobei die Im Filtermodul befindliche Flüssigkelt ausgetrieben wird.

3. Verfahren nach Anspruch 1 oder 2, **dadurch gekennzeichnet, dass** das Filtermodul mit Kohlendioxid, Stickstoff, Druckluft oder einem Gemisch aus diesen Gasen gefüllt wird.

4. Verfahren nach einem der Ansprüche 1 bis 3, **dadurch gekennzeichnet dass** das mindestens eine Filtermodul eine Filterkerze ist und das Filtermodul idealerweise eine Vielzahl von Filterkerzen umfasst.

5. Verfahren nach einem der vorhergehenden Ansprüche **dadurch gekennzeichnet, dass** das die durch die Einleitung der Suspension verdrängte Flüssigkeit in einen Unfiltratpuffertank gefördert wird.

6. Verfahren nach einem der vorhergehenden Ansprüche, **dadurch gekennzeichnet, dass** die durch die Einleitung der Suspension verdrängte Flüssigkeit in einen separaten Zwischentank gefördert wird und bei einer nachfolgenden Produktion stromaufwärts des Filtermoduls in den Leitungsweg des Unfiltrates eingeleitet wird.

7. Verfahren nach einem der vorhergehenden Ansprüche, **dadurch gekennzeichnet, dass** das die durch die Einleitung des Gases zu Beginn des Reinigungsschrittes nicht verdrängbare Flüssigkeit in einen separaten Zwischentank gefordert wird und bei einer nachfolgenden Produktion stromaufwärts des Filtermoduls in den Leitungsweg des Unfiltrates eingeleitet wird.

8. Verfahren nach einem der vorhergehenden Ansprüche, **dadurch gekennzeichnet, dass** in das gasgefüllte Filtermodul direkt die Voranschwemmung des mindestens einen Filterelementes erfolgt, wobei eine Suspension aus Bier und Filterhilfsmittel in das Filtermodul und eine Zeitlang im Kreislauf durch das Filtermodul geleitet wird und das Gas mindestens teilweise aus dem Filtermodul verdrängt wird.

9. Verfahren nach Anspruch 7 oder 6, **dadurch gekennzeichnet, dass** das Flüssigkeitsvolumen aus dem Zwischentank bei einem nächsten Vorlaufschritt bei der Voranschwemmung mittels einer Pumpe mindestens teilweise in die Suspension eingeleitet wird.

10. Verfahren zum Brauen von Bier, **dadurch gekennzeichnet, dass** mindestens ein Filtermodul nach einem Regenerationsverfahren gemäß einem der Ansprüche 1 bis 9 regeneriert wird.

## Claims

1. Method of regeneration for the lossless regeneration of filter modules which comprise at least one filter element, wherein the method of regeneration, with respect to a method of production connected therewith, comprises the steps of production feeding (feeding step), filter cleaning (cleaning step), and production output (output step), wherein, in the feeding step, product is fed out of the filter module, while in the cleaning step, the at least one filter element is freed of deposits, in particular filter cake and filter adjuncts, and cleaned, and in the output step, the at least one filter element is supplied with filter adjunct, and the filter module is filled with product, **characterised in that** the filter module is filled with gas at the end of the cleaning step, and the liquid in the filter module is thereby driven out, the filter module being filled up to a pressure from 1 bar to a maximum of 8 bar and wherein the gas-filled filter module is filled with filtered beer and subsequently the pre-deposition of the at least one filter element takes place, whereby a suspension of beer and/or water and filter adjunct is passed into the filter module and is circulated through the filter module for a while.

2. Method according to claim 1, **characterised in that** the filter module is filled with gas at the start and at the end of the cleaning step, driving out the fluid in the filter module.

3. Method according to claim 1 or 2, **characterised in that** the filter module is filled with carbon dioxide, nitrogen, compressed air or a mixture of these gases.

4. Method according to one of claims 1 to 3, **characterised in that** the at least one filter module is a filter candle and the filter module ideally comprises a plurality of filter candles.

5. Method according to one of the preceding claims, **characterised in that** the fluid forced out by the introduction of the suspension is conveyed into an unfiltrate buffer tank.

6. Method according to one of the preceding claims, **characterised in that** the fluid forced out by the introduction of the suspension is conveyed into a separate buffer tank and in a subsequent production is introduced upstream of the filter module into the pipe system of the unfiltrate.

7. Method according to one of the preceding claims, **characterised in that** the fluid which cannot be driven out by the introduction of the gas at the start of the cleaning step is conveyed into a separate buffer tank and in a subsequent production is introduced upstream of the filter module into the pipe system of the unfiltrate.

8. Method according to one of the preceding claims, **characterised in that** the pre-deposition of the at least one filter element takes place directly in the gas-filled filter module, whereby a suspension of beer and filter adjunct is passed into the filter module and circulated for a while through the filter module and at least some of the gas is driven out of the filter module.

9. Method according to claim 7 or 8, **characterised in that** the liquid volume from the buffer tank, in a next output step, is at least partly introduced into the suspension in the pre-deposition step by means of a pump.

10. Method of brewing beer, **characterised in that** at least one filter module is regenerated according to a regeneration method in accordance with one of claims 1 to 9.

## Revendications

1. Procédé pour la régénération sans pertes de modules filtrants, comprenant au moins un élément filtrant, le procédé de régénération, par rapport à un procédé de production lié, comprenant les étapes d'alimentation de production (étape d'alimentation), de nettoyage de filtre (étape de nettoyage) et de sortie de production (étape de sortie), sachant que pour l'étape d'alimentation, un produit est guidé hors du module filtrant, pour l'étape de nettoyage, l'au moins un élément filtrant est libéré d'adhérences, en particulier de gâteaux de filtre et d'adjuvants de filtrage et nettoyé et pour l'étape de sortie, l'au moins un élément filtrant est garni d'adjuvant de filtrage et le module filtrant est rempli de produit, **caractérisé en ce que** le module filtrant est rempli de gaz à la fin de l'étape de nettoyage, sachant que le liquide se trouvant dans le module filtrant est expulsé, le module filtrant est rempli jusqu'à une pression d'1 à 8 bar au maximum et le module filtrant rempli de gaz est rempli de bière filtrée et la formation de la précouche de l'au moins un élément filtrant est ensuite effectuée, une suspension composée de bière et/ou d'eau et d'adjuvant de filtrage est conduite dans le module filtrant et un certain temps dans le circuit par le module filtrant.

2. Procédé selon la revendication 1, **caractérisé en ce que** le module filtrant est rempli de gaz au début et à la fin de l'étape de nettoyage, sachant que le liquide se trouvant dans le module filtrant est expulsé.

3. Procédé selon la revendication 1 ou 2, **caractérisé en ce que** le module filtrant est rempli de dioxyde de carbone, d'azote, d'air comprimé ou d'un mélange de ces gaz.

4. Procédé selon l'une quelconque des revendications 1 à 3, **caractérisé en ce que** l'au moins un module filtrant est une bougie filtrante et **en ce que** le module filtrant comporte idéalement une pluralité de bougies filtrantes.

5. Procédé selon l'une quelconque des revendications précédentes, **caractérisé en ce que** le liquide déplacé par l'introduction de la suspension est transporté dans un réservoir intermédiaire de produit non filtré.

6. Procédé selon l'une quelconque des revendications précédentes, **caractérisé en ce que** le liquide déplacé par l'introduction de la suspension est transporté dans un réservoir intermédiaire séparé et pour une production suivante est introduit en amont du module filtrant dans la course de conduite du produit non filtré.

7. Procédé selon l'une quelconque des revendications précédentes, **caractérisé en ce que** le liquide qui ne peut pas être déplacé par l'introduction du gaz au début de l'étape de nettoyage est transporté dans un réservoir intermédiaire séparé et pour une production suivante est introduit en amont du module filtrant dans la course de conduite du produit non filtré.

8. Procédé selon l'une quelconque des revendications précédentes, **caractérisé en ce que** la formation de la précouche de l'au moins un élément filtrant est directement effectuée dans le module filtrant rempli de gaz, sachant qu'une suspension composée de bière et d'adjuvant de filtrage est conduite dans le module filtrant et un certain temps dans le circuit par le module filtrant et le gaz est déplacé au moins en partie du module filtrant.

9. Procédé selon la revendication 7 ou 6, **caractérisé en ce que** le volume de liquide du réservoir intermédiaire est introduit au moins en partie dans une suspension pour une étape de sortie suivante lors de la formation de la précouche à l'aide d'une pompe.

10. Procédé de brassage de bière, **caractérisé en ce que** l'au moins un module filtrant est régénéré selon un procédé de régénération selon l'une quelconque des revendications 1 à 9.
